# EUROPEAN PATENT APPLICATION

(11) **EP 2 486 962 A1**
(43) Date of publication of application: **15.08.2012**
(21) Application number: 11154326.0
(22) Date of filing: 14.02.2011
(51) Int. Cl.: A63B 55/08, B62K 5/04

(54) **Golf cart, and golf club holder unit**

(71) Applicant: Greenstreamer International B.V., 8502 TL Joure (NL)
(72) Inventor: Adams, Marc Inigo, 6041 SX, Roermond (NL)
(74) Representative: De Vries & Metman

(57) **Abstract**

The invention relates to a golf cart comprising a frame and a support (21, 22) for supporting a person on the cart. An undercarriage includes at least two wheels (14, 18). An energy source and a driving arrangement are provided for propelling the cart. The frame includes a plurality of elongated golf club holders (4) integrated in the cart. The golf club holders form at least a part of the frame of the golf cart and extend parallel to each other substantially in the longitudinal centre of the cart and in a forward and upwardly inclined position with the openings of the golf club holders at a front of the cart. The cart is made up of a plurality of easily disconnectable parts or units (1 - 3) in order to disassemble and assemble the cart for transport or for conversion into a trolley.

## Description

The present invention relates to a golf cart comprising a frame and a support for supporting a person on the cart, an undercarriage including at least two wheels, an energy source and a driving arrangement for propelling the cart and a steering arrangement.

Golf carts are available in the prior art in different embodiments. Larger golf carts or buggies are suitable for use by two persons and there are smaller carts that can be used by one person. In most cases such smaller carts have three wheels and are adapted to transport a person while sitting or standing on the cart. Special means are provided to carry a golf bag with golf clubs and all accessories therein. Examples of such golf carts can be found in US 2009/027700 A1, EP 0 576 724 A1, WO 2005/025972 A1, FR 2731670 A1, EP 1 603 792 A2 and US 6,390,216 B1.

The object of the present invention is to further improve the prior art golf carts.

For this purpose, the golf cart according to the invention is characterized in that the frame includes a plurality of elongated golf club holders integrated in the cart.

By integrating the golf club holders with the golf cart, it is easier to transport the total golf equipment now a separate golf bag is not required any more. Especially if the cart is made up of a plurality of easily disconnectable parts in order to dissemble the cart for transport and/or storage, it is easy to handle the separate parts of the golf cart and store them in the storage space of a car or building.

If the golf club holders form at least a part of the frame, in particularly the main part thereof, this may contribute to the compactness and light weight of the golf cart.

In an embodiment in which the golf club holders extend parallel to each other substantially in the longitudinal centre of the cart and in a forward and upwardly inclined position with the opening of the golf club holders at a front of the cart, the golf club holders form the centre of the cart and do not require additional space. Nonetheless, the golf clubs are easily accessible during play.

Due to the central position of the golf club holders and the low position thereof at the rear of the cart, it is easy to place a seat at the back of the cart so that a person can sit on the golf cart and thereby straddle the golf club holders.

The undercarriage may include two rear wheels driven by the driving arrangement and at least one front wheel connected to the steering arrangement. This is a traditional set up providing reliable driving conditions.

If the support includes a seat, the cart might also have foot rests on either side of the golf club holder. These foot rests may also be provided with controls such as an accelerator and/or a brake.

In case the rear wheels and driving arrangement form a rear wheel unit that is easily disconnectable from a golf club holder unit comprising the golf club holders, it is possible to either attach the seat to the golf club holder unit or to the rear wheel unit.

The driving arrangement may include at least one electric motor and in that case the energy source will include a battery. The electric motor and a holder for the battery may be connected to the rear wheel unit.

The golf club holders may comprise a plurality of parallel interconnected tubes each adapted to hold a golf club, and these tubes may comprise a positioning member to hold the heads of the golf clubs in a fixed orientation, so that the clubs will neatly stay in their predetermined position where they are readily identifiable and accessible for the person using the cart.

The golf club holders may enclose at least one storage space that can be closed, preferably in a watertight manner. In this manner the golf club holder unit completely replaces the golf bag including all the storage spaces, and possibly also all kinds of accessories, such as an umbrella holder, cooler, attachment means for a towel and the like.

The steering arrangement may include handle bars connected to a front fork carrying the at least one front wheel, and this steering arrangement may be supported by the golf club holders and may be easily disconnectable therefrom to further facilitate the transport and storage of the golf cart.

The golf club holder unit may be arranged such that it can be combined with different modules to convert it from a golf cart into a manually or electrically driven golf trolley having a rear wheel unit with or without driving arrangement and a steering arrangement unit including a handle bar to pull/push the trolley or control the driving arrangement.

The invention also includes a rear wheel unit including an undercarriage, a driving arrangement, a seat and mounting members to mount the rear wheel unit to a golf club holder unit. The invention further includes a golf trolley comprising a golf club holder unit, a rear wheel unit mounted to the golf club holder unit and a front wheel unit including a steering arrangement. The units may be easily dismountable.

Further features and advantages of the invention follow from the description hereunder with reference to the drawings schematically showing an exemplary embodiment of the golf cart.
Figures 1-4 show a front, side, rear and perspective view of the exemplary embodiment of the golf cart with a person sitting on it.
Figures 5-8 are views corresponding to that of Figures 1-4, but showing on an enlarged scale the golf club holder unit of the golf cart of Figures 1-4.
Figures 9-12 are views corresponding to that of Figures 5-8, but showing the rear wheel unit of the golf cart of Figures 1-4.
Fig. 13 is a perspective view of another embodiment of a golf club holder unit of a golf cart according to the invention.
Figs. 14 and 15 show on a smaller scale and in perspective view the parts that can be mounted to the golf club holder unit of Fig. 13 to use it as a golf cart and as a manual golf trolley.
Figs. 16 - 18 illustrate in 4 different views three ways of using the golf club holder unit of Fig. 13 in a pull trolley (Fig. 16), in a push trolley (Fig. 17) and in a golf cart (Fig. 18).

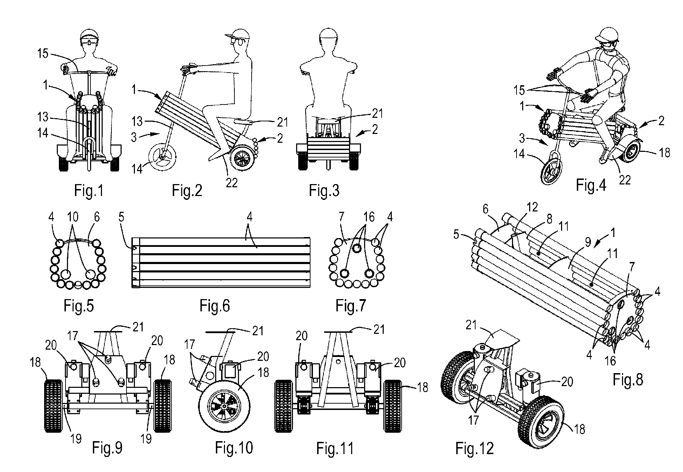

The golf cart as shown in the drawings, and especially in Figures 1-4 thereof, comprises three main parts that are easily connectable and disconnectable in order to enable one person to easily handle the golf cart and to store and transport the golf cart in a compact manner. In this embodiment the golf cart includes a golf club holder unit 1, a rear wheel unit 2 and a front wheel unit 3.

The golf club holder unit 1 as separately shown in Figures 5-8 forms the main part of the frame of the golf cart and includes a plurality of golf club holders 4 consisting of interconnected tubes that extend parallel and are positioned symmetrically with respect to the longitudinal central plane of the cart as shown in Figures 1-4. In the illustrated embodiment, there are 14 tubes, each for receiving one golf club. The lowest additional tube is not a golf club holder. In the mounted position, the golf club holders 4 extend in an inclined orientation from a low position at the rear of the golf cart to a higher position at the front of the golf cart. The openings of the golf club holders 4 are at the front of the golf cart and are at such a height that a user can easily insert or remove a club into and out of the respective golf club holder 4. The golf club holders 4 may be provided at their opening with a head positioner 5 which holds the head of the respective golf club in a desired orientation in order to be able to readily identify the golf club, to obtain a nice appearance and to avoid rattling of the golf club heads when driving the golf cart.

The golf club holder unit 1 includes several transverse walls, i.e. a front wall 6, a rear wall 7, a steering arrangement wall 8 and a partition wall 9 that provide rigidity to the unit. As shown in Figures 1, 4 and 5, the front wall 6, and also the steering arrangement wall 8 and partition wall 9 may include one or more openings 10 adapted to receive further golf accessories, such as an umbrella, ball retriever and the like. These openings 10 could also contain tubes as with the golf club holders 4. Furthermore it would be possible to adapt one of the golf club holders 4 to receive the golf accessories, which are normally of larger diameter than the golf club shaft and grip.

The tubes of the golf club holders 4 form the side walls and bottom wall of the golf club holder unit and thereby enclose one or more storage places 11 to carry golf equipment such as rain gear, and other golf accessories, such as balls, tees, gloves and the like. One of the storage spaces 11 may also be used as cooling space to contain drinks and food. Such storage space and other storage containers may be formed directly in the golf club holder unit 1, or may be formed in separate containers that can be placed into (and possibly also removed from) the storage spaces 11 of the golf club holder unit. The storage spaces 11 or the containers therein are closable by a (pivotable) cover which closes the storage spaces 11, preferably in a watertight manner to obviate the need of separate rain covers. On the outside of the golf club holder unit other accessories may be provided, such as arrangements to hold an unfolded umbrella, to hold a towel, a glove or other accessories externally of the golf cart.

The steering arrangement wall 8 of the golf club holder unit 1 includes a mounting member 12 to mount the front fork 13 including a front wheel 14 and handle bars 15, providing a steering arrangement for the golf cart. Of course it would also be possible to steer the golf cart in another way. The front fork 13 may also be adapted to include two front wheels. Due to the front fork 13 running through the lowest tube of the golf club holder unit, it cannot contain a golf club.

The rear wall 7 of the golf club holder unit 1 includes mounting members 16 to receive mounting members 17 of the rear wheel unit 2 in order to easily connect and disconnect the rear wheel unit 2 to and from the golf club holder unit 1. Of course, all kinds of disconnectable mounting arrangements are conceivable.

The rear wheel unit 2 includes two rear wheels 18 aligned with each other and carried by a common axle 19 or separate axles. The axle(s) 19 and thereby the rear wheels 18 can be driven by means of at least one and in this case two electric motors 20 which obtain power from a battery (not shown) which can be placed on a battery holder (not shown) mounted to the rear wheel unit 2, for example between the electric motors 20 or as part of a seat 21 which is mounted to the rear wheel unit 2 as well. The battery may be a traditional lead battery but also other batteries can be used, such as lithium ion batteries or the like.

The electric motors are provided with a control unit to control the driving speed of the golf cart and include either a remote control provided on the handle bars 15 or an accelerator combined with one or two foot rests 22 which are part of the rear wheel unit 2 as well (but left out in Figures 9-12 for clarity's sake).

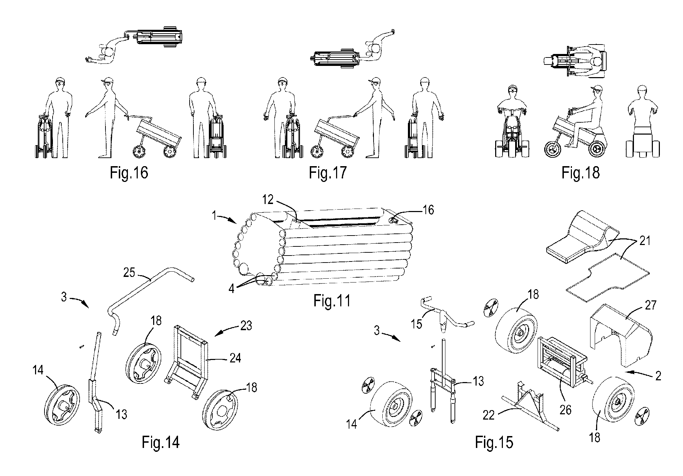

Figs. 13 - 18 show another embodiment of the golf cart according to the invention, that includes a number of (easily) exchangeable units or modules in order to convert the golf cart into a manually or electrically driven golf trolley. Fig. 13 shows the golf club holder unit 1 which is comparable to that of Figs. 1 - 12. Figs. 14 and 15 show the parts that are optionally mounted to the golf club holder unit 1 to convert it into either a manually driven golf trolley (Fig. 16, 17), or an electrically driven golf cart (Fig. 18).

The parts of Fig. 14 include a rear wheel unit 23 having a frame or wheel support 24 which is mountable to the mounting members 16 of the golf club holder unit 1 and wheels 7 rotationally supported by the support 24. The parts further include the front wheel unit 3 having the front wheel 14, the front fork 13 and a push/pull handle bar 25 forming a steering arrangement. The handle bar 25 is adjustable so as to be able to be used for pulling (Fig. 16) or pushing (Fig. 17) the golf trolley. The handle bar 25 is attached to the front wheel unit 3 so as to be able to steer the front wheel 14. the rear wheel unit 23 may also be provided with an electric motor and battery in order to be able to use the golf club holder unit 1 in an electric trolley.

The parts of Fig. 15 include the rear wheel unit 2 having the rear wheels 18, a support 26 for supporting the rear wheels 18, the electric motor(s) 20 and the battery, a cover 27 and the seat 21. The foot rests 22 may be mounted to the support 26 or directly to the golf club holder unit 1 as shown in Fig. 18. The parts of Fig. 15 further include the front wheel unit 3 which is similar to that of Figs. 1 - 12.

With this embodiment of Figs. 13 - 18 it is possible to use the golf club holder 4 in different manners. One can for example buy only the golf club holder and the parts to make it into a manually or electrically driven trolley, and then buy additional parts later on to convert it into a electric golf cart, but it is of course also possible to buy all parts at once and select the parts depending on the required use. For example on a flat golf course one may use the golf club holder as a manual trolley, whereas it may be converted into an electric cart for hilly courses. To promote this conversion, the various parts may be easily mountable and dismountable by means of mounting members well known in the art, such as click and twist arrangements.

The parts of the golf cart may be made from light weight materials, such as aluminium, titanium, light weight steel and/or plastic in order to provide for a light weight cart which on the one hand provides for a comfortable round of golf and on the other hand is also easy to handle for transport and storage, especially when the golf cart is made with easily disconnectable units.

The invention is not limited to the embodiment shown in de drawings and described here before and may be varied in different manners within the scope of the appended claims. For example, the golf cart may also be made in two units or just one unit, wherein parts of the cart may be foldable to provide a more compact storage. Handles may be provided on one or more units of the golf cart to facilitate handling thereof. The golf cart may be provided with one or more brakes, but it is also possible to use self-braking electric motors so that no separate brakes are required. The golf club holders may have other shapes and be combined into an integral unit in which the golf club holders consist of internal elongated (cylindrical) cavities each destined to receive some, but preferably only one golf club.

## Claims

1. A golf cart comprising a frame and a support for supporting a person on the cart, an undercarriage including at least two wheels, an energy source and a driving arrangement for propelling the cart, and a steering arrangement, **characterized in that** the frame includes a plurality of elongated golf club holders integrated in the cart.

2. The golf cart of claim 1, wherein the golf club holders form at least a part of the frame of the golf cart.

3. The golf cart of claim 1 or 2, wherein the golf club holders extend parallel to each other substantially in the longitudinal centre of the cart and in a forward and upwardly inclined position with the openings of the golf club holders at a front of the cart.

4. The golf cart of any of claims 1 - 3, wherein the undercarriage includes two rear wheels driven by the driving arrangement, and at least one front wheel connected to the steering arrangement.

5. The golf cart of any one of the preceding claims, wherein the cart is made up of a plurality of easily disconnectable parts in order to disassemble the cart for transport.

6. The golf cart of claims 4 and 5, wherein the rear wheels and driving arrangement form a rear wheel unit that is easily disconnectable from a golf club holder unit comprising the golf club holders, and wherein the golf cart optionally comprises a replacement rear wheel unit without driving arrangement and/or seat and a replacement steering arrangement including a pulling/pushing handle.

7. The golf cart of any one of the preceding claims, wherein the support includes a seat and preferably also foot rests on either side of the golf club holders.

8. The golf cart of claims 6 and 7, wherein the seat is attached to the rear wheel unit.

9. The golf cart according to any one of the preceding claims, wherein the driving arrangement includes at least one electric motor and the energy source includes a battery.

10. The golf cart of claims 6 and 9, wherein the electric motor and a holder for the battery are connected to the rear wheel unit.

11. The golf cart of any one of the preceding claims, wherein the golf club holders comprise a plurality of parallel interconnected tubes, each adapted to hold a golf club.

12. The golf cart of claim 11, wherein the tubes comprise a positioning member to hold a head of the golf clubs in a fixed orientation.

13. The golf cart of any one of the preceding claims, wherein the golf club holder enclose at least one storage space that can be closed, preferably in a water tight manner.

14. The golf cart of any one of the preceding claims, wherein the steering arrangement includes handle bars connected to a front fork carrying the at least one front wheel, and/or wherein preferably the steering arrangement is supported by the golf club holders, and are easily disconnectable therefrom.

15. A golf club holder unit including a plurality of elongated golf club holders, said golf club holder unit comprising mounting members to disconnectably mount a rear wheel unit thereto and a further mounting member to disconnectably mount a front wheel unit and/or steering arrangement thereto.
